# EUROPÄISCHE PATENTANMELDUNG

(11) **EP 2 330 059 A1**
(43) Veröffentlichungstag der Anmeldung: **08.06.2011**
(21) Anmeldenummer: 09014950.1
(22) Anmeldetag: 02.12.2009
(51) Int. Cl.: B65G 1/04, B66B 11/04, B66F 9/07

(54) **Vertikalförderer**

(71) Anmelder: Weets, Jakob, 26725 Emden (DE)
(72) Erfinder: Grond, Johann Walter, 26725 Emden (DE)
(74) Vertreter: Siekmann, Gunnar

(57) **Zusammenfassung**

Bei einem Vertikalförderer mit einem Tragwerk (1) und mit wenigstens zweien an dem Tragwerk (1) geführten Hubschlitten (2,3) sind die Hubschlitten (2,3) jeweils über ein Hubwerk und jeweils über eine Schlittenführung (4,5) mit dem Tragwerk (1) verbunden. Die Hubschlitten (2,3) weisen Lastaufnahmemittel (6,7) mit ineinanderlaufenden Förderstrecken auf. Außerdem weist jeder Hubschlitten (2,3) eine Stelleinrichtung (8,9) auf, mit der seine Lastaufnahmemittel (6,7) aus der Förderstrecke der Lastaufnahmemittel (6,7) des jeweils anderen Hubschlittens (2,3) herausbewegbar sind. Das Tragwerk (1) weist wenigstens vier die Förderstrecken der Hubschlitten begrenzende Stützen (10,11 bzw. 12,13) auf, wobei die Hubschlitten (2,3) jeweils zwischen zwei einander benachbart angeordneten Stützen (10,11 bzw. 12,13) geführt sind.

## Beschreibung

Die Erfindung bezieht sich auf einen Vertikalförderer mit einem Tragwerk und mit wenigstens zweien an dem Tragwerk geführten Hubschlitten, die jeweils über ein Hubwerk und jeweils über eine Schlittenführung mit dem Tragwerk verbunden sind.

Vertikalförderer mit zwei oder mehr Hubschlitten dienen dem leistungsorientierten Be- und Entladen von diversen Regallagersystemen. Diese weisen in der Regel nur ein einziges Ein- und Ausgangsportal auf, an dem es regelmäßig zu Stauungen der ein- und auszulagernden Güter kommt. Somit sind die für Be- und Entladevorgänge benötigten Be- und Entladezeiten maßgeblich von der Anzahl der in dem Tragwerk bewegten Hubschlitten abhängig. Vertikalfördersysteme mit zwei oder mehr Hubschlitten haben jedoch den Nachteil, daß ihre Herstellungs- und Betriebskosten sowie der erforderliche Platzbedarf nachteilig hoch sind und sie deshalb für viele Bereiche ungeeignet sind.

Der Erfindung liegt deshalb die Aufgabe zugrunde, einen Vertikalförderer der eingangs genannten Gattung aufzuzeigen, dessen Herstellungs- und Betriebskosten sowie dessen Platzbedarf maßgeblich verringert sind.

Diese Aufgabe ist durch einen Vertikalförderer mit den Merkmalen des Patentanspruches 1 gelöst. Vorteilhafte Weiterbildungen der Erfindung sind in den Unteransprüchen 2 bis 10 angegeben.

Der erfindungsgemäße Vertikalförderer zeichnet sich dadurch aus, daß die Hubschlitten Lastaufnahmemittel mit ineinanderlaufenden Förderstrecken aufweisen, und daß jeder Hubschlitten eine Stelleinrichtung aufweist, mit der seine Lastaufnahmemittel aus der Förderstrecke der Lastaufnahmemittel des jeweils anderen Hubschlittens herausbewegbar sind. Damit weisen auch die auf den Lastaufnahmemitteln verschiedener Hubschlitten geförderten Lasten ganz oder teilweise ineinanderlaufende Förderstrecken auf, so daß der für mehrere Hubschlitten erforderliche Platzbedarf vorteilhaft herabgesetzt ist. Eine Kollision zweier sich in dem Tragwerk begegnender Hubschlitten wird mit der Stelleinrichtung verhindert, durch welche die Lastaufnahmemittel eines der beiden Hubschlitten, vorzugsweise eines unbeladenen Hubschlittens, wenigstens für den Zeitraum ihrer Begegnung, aus der Förderstrecke der Lastaufnahmemittel des jeweils anderen Hubschlittens herausgefahren werden.

Nach einer ersten Weiterbildung der Erfindung weist das Tragwerk wenigstens vier die Förderstrecken der Hubschlitten begrenzende Stützen auf, wobei die Hubschlitten jeweils zwischen zwei einander benachbart angeordneten Stützen geführt sind. Damit können an dem Tragwerk bis zu vier Hubschlitten geführt werden, die jeweils über ein Hubwerk und jeweils über eine Schlittenführung mit dem Tragwerk verbunden sind. Vorzugsweise wird der erfindungsgemäße Vertikalförderer jedoch mit zwei Hubschlitten ausgerüstet, die einander gegenüberliegend angeordnet sind.

Nach einer nächsten Weiterbildung der Erfindung weist jede Stelleinrichtung wenigstens ein Drehgelenk auf. Das Drehgelenk stellt eine konstruktiv besonders einfache Lösung dar, um die Lastaufnahmemittel eines Hubschlittens aus der Förderstrecke der Lastaufnahmemittel des jeweils anderen Hubschlittens herauszufahren. Es liegt jedoch im Rahmen der Erfindung, die Stelleinrichtung auf der Basis von Schienen- oder Kulissenführungen auszubilden.

Eine besonders vorteilhafte Weiterbildung der Erfindung besteht darin, daß jede Drehachse eines Drehgelenkes die den zugehörigen Hubschlitten führenden Stützen durchlaufen. Auf diese Weise können die Lastaufnahmemittel besonders platzsparend in eine zwischen zwei Stützen aufgespannte Vertikalebene verschwenkt werden. Dazu sind mit den Drehgelenken vorzugsweise Verdrehwinkel von 90 Grad realisierbar, so daß die Lastaufnahmemittel eines der Hubschlitten in Abhängigkeit ihrer konstruktiven Ausführung entweder mit einer Aufwärtsbewegung oder mit einer Abwärtsbewegung aus der Förderstrecke der Lastaufnahmemittel des jeweils anderen Hubschlittens herausbewegt werden können.

Zur Übergabe der ein- oder auszulagernden Lasten zwischen den Hubschlitten und dem Regallagersystem sind den Lastaufnahmemitteln der Hubschlitten in verschiedenen Horizontalebenen stationär am Tragwerk angeordnete Lastübergabeeinrichtungen zugeordnet. Eine einzelne Lastübergabeeinrichtung kann dabei sowohl mit den Lastaufnahmemitteln eines einzigen Hubschlittens als auch mit den Lastaufnahmemitteln mehrerer Hubschlitten zusammenwirken.

Eine besonders zuverlässige und platzsparende Übergabe der Lasten von den Hubschlitten in ein Regallagersystem ist dadurch erreicht, daß auch jede Lastübergabeeinrichtung in die Förderstrecken der Hubschlitten hineinstehende Lastaufnahmemittel aufweist und daß jede Lastübergabeeinrichtung ebenfalls eine Stelleinrichtung aufweist, mit der ihre Lastaufnahmemittel aus den Förderstrecken der Hubschlitten herausbewegbar sind. Auch hier weisen die Stelleinrichtungen vorzugsweise Drehgelenke auf, mit denen die Lastübergabeeinrichtungen besonders platzsparend in eine zwischen zwei Stützen aufgespannte Vertikalebene verfahrbar sind.

Für einen besonders schonenden Weitertransport der Lasten aus den Förderstrecken der Hubschlitten heraus, wird vorgeschlagen, die Lastaufnahmemittel der Lastübergabeeinrichtungen mit Kettenförderern auszurüsten. Derartige Kettenförderer weisen beispielsweise parallel zueinander verlaufende Zugketten auf, die über ein Gliederband miteinander verbunden sind, dessen einzelne Förderglieder jeweils wenigstens einen Lastaufnehmer aufweisen. Diese sind beispielsweise zum Transport von Pkw's geeignete Radaufnahmen.

Alternativ oder ergänzend wird vorgeschlagen, daß die Lastaufnahmemittel der Hubschlitten mit Kettenförderern ausgerüstet sind. Selbstverständlich ist es ebenso denkbar, die Lastaufnahmemittel mit anderen Horizontalförderern auszurüsten, die zur Beförderung der ein- und auszulagernden Lasten geeignet sind.

Nach einer nächsten Weiterbildung der Erfindung sind die Stelleinrichtungen der Lastaufnahmemittel und die Hubwerke der Hubschlitten über Steuerleitungen miteinander verbunden. Die Steuerleitungen können als Stromleitungen, Hydraulikleitungen oder als mechanische Wirkverbindungen ausgebildet sein. Die der Steuerleitung zugrundeliegende Steuerung arbeitet vorzugsweise nach dem Prinzip "First Go, First Action", womit ein störungsarmer Betrieb des erfindungsgemäßen Vertikalförderers gewährleistet ist.

Eine ergänzende Maßnahme besteht darin, die Stelleinrichtungen der Lastaufnahmemittel und sämtliche Kettenförderer über Steuerleitungen miteinander zu verbinden. Auf diese Weise können mit dem erfindungsgemäßen Vertikalförderer sämtliche Be- und Entladevorgänge an Regallagersystemen vollautomatisiert und folglich besonders leistungsorientiert durchgeführt werden.

Ein Ausführungsbeispiel, aus dem sich weitere erfinderische Merkmale ergeben, ist in der Zeichnung dargestellt. Es zeigen:
- Fig. 1:: eine perspektivische Ansicht des erfindungsgemäßen Vertikalförderers in einem ersten Ausführungsbeispiel;
- Fig. 2:: eine perspektivische Ansicht des erfindungsgemäßen Vertikalförderers in einem zweiten
- Fig. 3:: Ausführungsbeispiel; eine schematisierte Seitenansicht eines erfindungsgemäßen Vertikalförderers in einem dritten Ausführungsbeispiel;
- Fig. 4:: eine schematisierte Seitenansicht eines erfindungsgemäßen Vertikalförderers in einem vierten Ausführungsbeispiel; und
- Fig. 5:: eine schematisierte Draufsicht eines erfindungsgemäßen Vertikalförderers in einem fünften Ausführungsbeispiel.

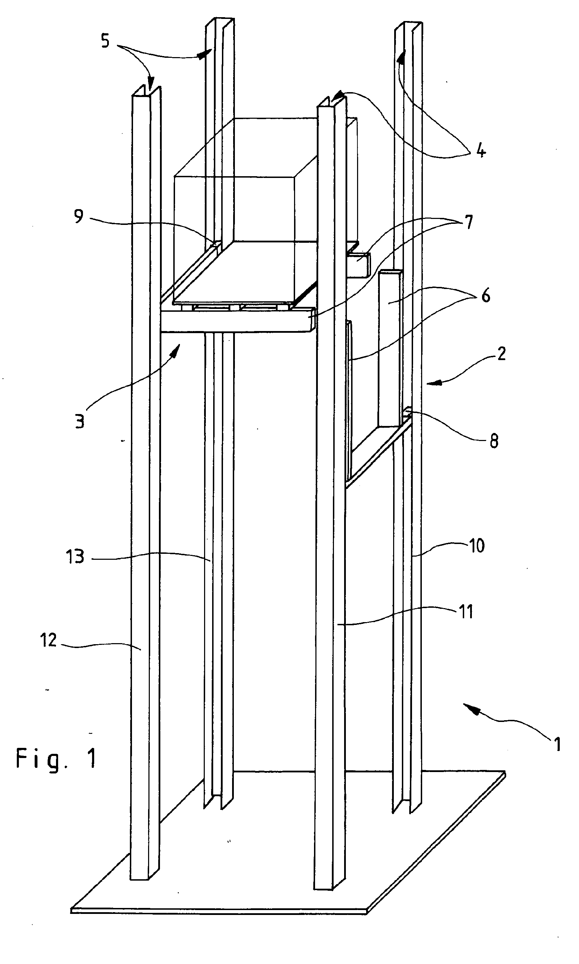

Die Fig. 1 zeigt eine perspektivische Ansicht des erfindungsgemäßen Vertikalförderers mit einem Tragwerk 1 und mit zweien an dem Tragwerk 1 geführten Hubschlitten 2, 3, die jeweils über ein nicht dargestelltes Hubwerk und jeweils über eine Schlittenführung 4, 5 mit dem Tragwerk 1 verbunden sind. Die Hubschlitten 2, 3 weisen als Zinkenpaare ausgebildete Lastaufnahmemittel 6, 7 mit ineinanderlaufenden Förderstrecken auf. Dabei weist jeder Hubschlitten 2, 3 eine Stelleinrichtung 8, 9 auf, mit der seine Lastaufnahmemittel 6, 7 aus der Förderstrecke der Lastaufnahmemittel 6, 7 des jeweils anderen Hubschlittens 2, 3 herausbewegbar sind. Das Tragwerk 1 weist vier die Förderstrecken der Hubschlitten 2, 3 begrenzende Stützen 10, 11, 12, 13 auf, wobei die Hubschlitten 2, 3 jeweils zwischen zwei einander benachbart angeordneten Stützen 10, 11 bzw. 12, 13 hubbeweglich geführt sind. Die Stelleinrichtungen 8, 9 weisen jeweils ein Drehgelenk auf, dessen Drehachse die den zugehörigen Hubschlitten 2, 3 führenden Stützen 10, 11 bzw. 12, 13 durchlaufen. Die Fig. 1 zeigt den Hubschlitten 2 in einer Rückholposition, in welcher seine Lastaufnahmemittel 6 in eine zwischen den Stützen 10, 11 aufgespannte Vertikalebene verschwenkt sind. Den Hubschlitten 3 zeigt die Fig. 1 in einer Arbeitsstellung, in welcher seine Lastaufnahmemittel 7 in die Förderstrecke der Lastaufnahmemittel 6 des Hubschlittens 2 hineinstehen.

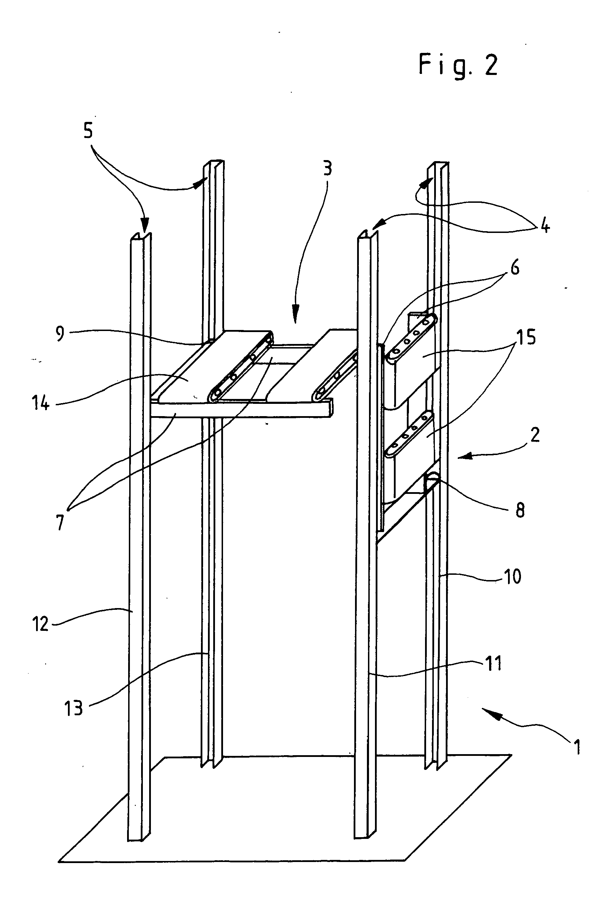

Die Fig. 2 zeigt eine perspektivische Ansicht des erfindungsgemäßen Vertikalförderers, auf dessen Lastaufnahmemitteln 6, 7 elektromotorisch angetriebene Bandförderer 14, 15 zum Weitertransport von nicht dargestellten Lasten angeordnet sind. Gleiche Bauteile sind mit gleichen Bezugszahlen versehen.

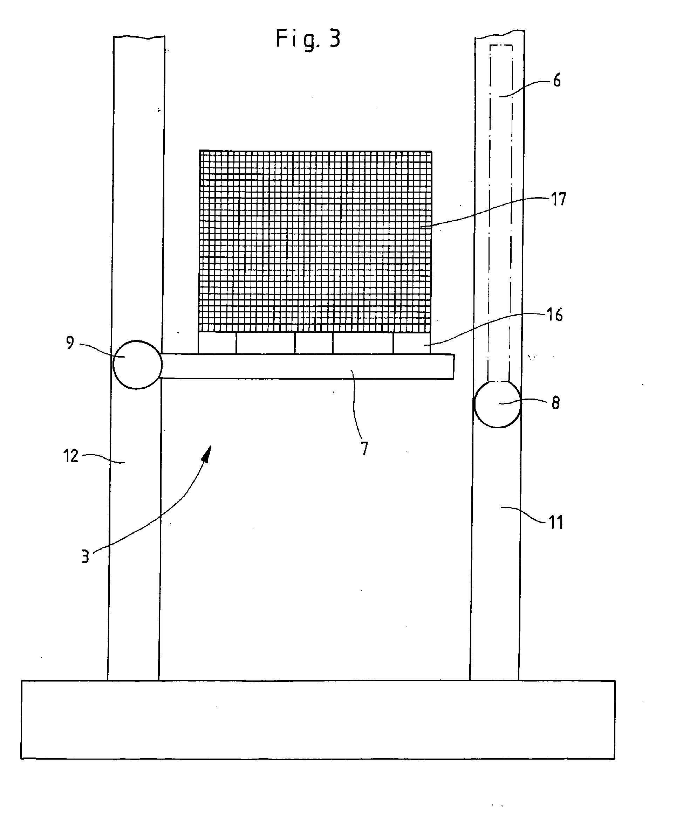

Die Fig. 3 zeigt eine schematisierte Ansicht des erfindungsgemäßen Vertikalförderers, auf dessen Lastaufnahmemitteln 7 eine Palette 16 mit einer Gitterbox 17 abgestellt ist. Mit der strichpunktierten Darstellung der Lastaufnahmemittel 6 macht die Fig. 2 deutlich, daß der in der Rückholposition dargestellte Hubschlitten 2 vorteilhaft raumsparend vollständig in einer zwischen zwei Stützen aufgespannten Vertikalebene aufgenommen wird. Gleiche Bauteile sind mit gleichen Bezugszahlen versehen.

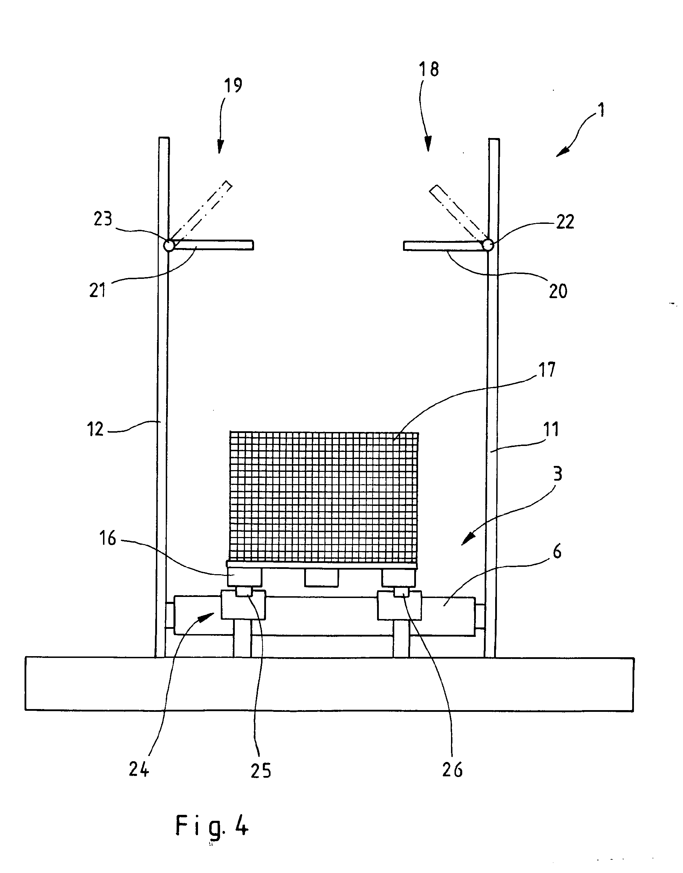

Die Fig. 4 zeigt ebenfalls eine schematisierte Seitenansicht der erfindungsgemäßen Vorrichtung. In diesem Ausführungsbeispiel sind den Lastaufnahmemitteln 6 stationär am Tragwerk 1 angeordnete Lastübergabeeinrichtungen 18, 19 zugeordnet. Jede Lastübergabeeinrichtung 18, 19 weist in die Förderstrecke des Hubschlittens 3 hineinstehende Lastaufnahmemittel 20, 21 sowie eine als Drehgelenk fungierende Stelleinrichtung 22, 23 auf, mit der ihre Lastaufnahmemittel 20, 21 aus der Förderstrecke des Hubschlittens 3 herausbewegbar sind. Außerdem ist dem Lastaufnahmemittel 6 des Hubschlittens 3 ein auf dem Fundament des Tragwerkes 1 abgestützter Kettenförderer 24 zugeordnet, welcher zwei parallel zueinander verlaufende Zugketten 25, 26 aufweist. In diesem Ausführungsbeispiel steht die die Gitterbox 17 tragende Palette 16 noch auf den Kettengliedern der Zugketten 25, 26 auf.

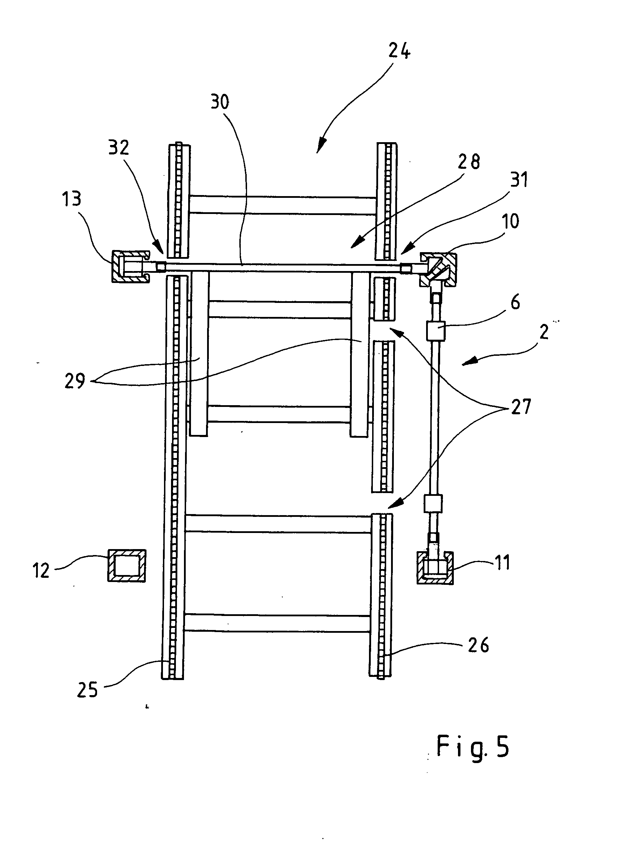

Die Fig. 5 zeigt eine Draufsicht auf einen erfindungsgemäßen Vertikalförderer. In dieser Ansicht ist dargestellt, daß die als Zinkenpaar ausgebildeten Lastaufnahmemittel 6 des Hubschlittens 2 mit in der Zugkette 26 des Kettenförderers 24 angeordneten Unterbrechungen 27 zusammenwirken. Weiterhin zeigt die Fig. 5 einen zwischen den Stützen 10, 13 angeordneten Hubschlitten 28, dessen Lastaufnahmemittel 29 quer zu den Lastaufnahmemitteln 6 des Hubschlittens 2 stehen und dessen die Lastaufnahmemittel 29 miteinander verbindende Traverse 30 mit in beiden Zugketten 25, 26 angeordneten Unterbrechungen 31, 32 zusammenwirkt. Gleiche Bauteile sind mit gleichen Bezugszahlen versehen.

## Patentansprüche

1. Vertikalförderer mit einem Tragwerk und mit wenigstens zweien an dem Tragwerk geführten Hubschlitten, die jeweils über ein Hubwerk und jeweils über eine Schlittenführung mit dem Tragwerk verbunden sind,
**dadurch gekennzeichnet,**
**daß** die Hubschlitten (2, 3) Lastaufnahmemittel (6, 7) mit ineinanderlaufenden Förderstrecken aufweisen, und
**daß** jeder Hubschlitten (2, 3) eine Stelleinrichtung (8, 9) aufweist, mit der seine Lastaufnahmemittel (6, 7) aus der Förderstrecke der Lastaufnahmemittel (6, 7) des jeweils anderen Hubschlittens (2, 3) herausbewegbar sind.

2. Vertikalförderer nach Anspruch 1, **dadurch gekennzeichnet, daß** das Tragwerk (1) wenigstens vier die Förderstrecken der Hubschlitten (2, 3) begrenzende Stützen (10, 11, 12, 13) aufweist, und daß die Hubschlitten (2, 3) jeweils zwischen zwei einander benachbart angeordneten Stützen (10, 11 bzw. 12, 13) geführt sind.

3. Vertikalförderer nach Anspruch 1 oder 2, **dadurch gekennzeichnet, daß** jede Stelleinrichtung (8, 9) wenigstens ein Drehgelenk aufweist.

4. Vertikalförderer nach Anspruch 2 oder 3, **dadurch gekennzeichnet, daß** jede Drehachse eines Drehgelenkes die den zugehörigen Hubschlitten (2, 3) führenden Stützen (10, 11, 12, 13) durchlaufen.

5. Vertikalförderer nach einem der Ansprüche 1 bis 4, **dadurch gekennzeichnet, daß** den Lastaufnahmemitteln (6, 7) in verschiedenen Horizontalebenen stationär am Tragwerk (1) angeordnete Lastübergabeeinrichtungen (18, 19) zugeordnet sind.

6. Vertikalförderer nach Anspruch 5, **dadurch gekennzeichnet, daß** jede Lastübergabeeinrichtung (18, 19) in die Förderstrecken der Hubschlitten (2, 3) hineinstehende Lastaufnahmemittel (20, 21) aufweist und daß jede Lastübergabeeinrichtung (18, 19) eine Stelleinrichtung (22, 23) aufweist, mit der ihre Lastaufnahmemittel (20, 21) aus den Förderstrecken der Hubschlitten (2, 3) herausbewegbar sind.

7. Vertikalförderer nach Anspruch 5 oder 6, **dadurch gekennzeichnet, daß** die Lastaufnahmemittel (21, 21) der Lastübergabeeinrichtungen (18, 19) mit Kettenförderern (24) ausgerüstet sind.

8. Vertikalförderer nach einem der Ansprüche 1 bis 7, **dadurch gekennzeichnet, daß** die Lastaufnahmemittel (6, 7) der Hubschlitten, (3) mit Kettenförderern ausgerüstet sind.

9. Vertikalförderer nach einem der Ansprüche 1 bis 8, **dadurch gekennzeichnet, daß** die Stelleinrichtungen (8, 9, 22, 23) der Lastaufnahmemittel (6, 7, 20, 21) und die Hubwerke der Hubschlitten (2, 3) über Steuerleitungen miteinander verbunden sind.

10. Vertikalförderer nach Anspruch 9, **dadurch gekennzeichnet, daß** die Stelleinrichtungen (8, 9, 22, 23) der Lastaufnahmemittel (6, 7, 20, 21) und sämtliche Kettenförderer (24) über Steuerleitungen miteinander verbunden sind.
